# EUROPÄISCHE PATENTSCHRIFT

(11) **EP 3 969 147 B1**
(45) Veröffentlichungstag und Bekanntmachung des Hinweises auf die Patenterteilung: **14.06.2023**
(21) Anmeldenummer: 20714508.7
(22) Anmeldetag: 20.03.2020
(51) Int. Cl.: B01D 29/11, B01D 29/13, B01D 29/15, B01D 29/58, B01D 29/90

(54) **FILTERELEMENT FÜR EINE FILTEREINHEIT**
FILTER ELEMENT FOR A FILTER UNIT
ÉLÉMENT FILTRANT CONÇU POUR UN ENSEMBLE FILTRE

(30) Priorität: 14.05.2019 DE 102019207003
(43) Veröffentlichungstag der Anmeldung: 23.03.2022
(73) Patentinhaber: Filtration Group GmbH, 74613 Öhringen (DE)
(72) Erfinder: GAUGLER, Thomas, 74613 Öhringen (DE)
(74) Vertreter: BRP Renaud & Partner mbB Rechtsanwälte Patentanwälte Steuerberater
(86) Internationale Anmeldenummer: PCT/EP2020/057785
(87) Internationale Veröffentlichungsnummer: WO 2020/229026

(56) Entgegenhaltungen:
- WO-A1-2014/150503
- WO-A1-2018/122985
- CN-A- 105 041 529
- CN-A- 108 568 160
- DE-U1-202017 104 240

## Beschreibung

Die vorliegende Erfindung betrifft ein Filterelement für eine Filtereinheit zum Filtern eines Fluids gemäß dem Oberbegriff des Anspruchs 1. Die Erfindung betrifft außerdem eine Filtereinheit mit einem derartigen Filterelement.

Zum Herausfiltern von festen Partikeln aus Flüssigkeiten kommen in entsprechenden Filtereinheiten Filterelemente zum Einsatz, die einen Filterkörper mit einem Filtermaterial zur Partikelfiltration besitzen. Diese Filtermaterialien weisen Filterstrukturen aus geeigneten Materialien auf. Beispielsweise werden Filterstrukturen aus Gewebe- und/oder Zellulosematerialien verwendet, welche materialbedingt eingeschränkte Filtereigenschaften aufweisen und nur bedingt in komplexe Formen gebracht werden können. Derartige Filterelemente weisen eine vorbestimmte und nicht veränderbare Filtercharakteristik auf, was eine Optimierung auf das zu filternde Fluid nur eingeschränkt zulässt.

Aus der DE 43 44 805 C2 ist ein Filtermaterial zur Sorptionsfiltration mit aus Teilchen bestehender Filterstruktur bekannt, welche durch ein faseriges dreidimensionales Gerüst von Verbundfasern gebildet werden. Diese Verbundfasern weisen außer einer Strukturkomponente eine weitere erste Komponente mit einem um ca. 20°C niedrigeren Schmelzpunkt als die Strukturkomponente auf, so dass bei einer entsprechenden thermischen Behandlung diese erste Komponente schmelzen kann und sich somit kreuzende, bzw. sich berührende Strukturkomponenten miteinander verbinden können.

Aus der DE 20 2017 104 240 U1 ist ein keramisches Filterelement zum Filtern von Metallschmelzen bekannt. Das Filterelement weist einen 3D-gedruckten gleichmäßigen flachen Strukturkörper zum Filtern der Metallschmelze und einen 3D-gedrukten gleichmäßigen Stützkörper auf, der den Strukturkörper geschlossen umlaufend einfasst und dadurch quasi ein Käfig zum Halten des Strukturkörpers bildet.

Das faserige dreidimensionale Gerüst setzt sich aus Strukturfasern verschiedener Abmessungen, insbesondere unterschiedlicher Faserdicken zusammen, welche alle die zuvor beschriebene Eigenschaft einer weiteren ersten Komponente aufweisen und durch die erwähnte thermische Behandlung miteinander verbunden sind. Das faserige dreidimensionale Gerüst von Verbundfasern besteht also aus unterschiedlich dimensionierten Strukturfasern, welche mehr oder weniger frei zueinander angeordnet und verbunden sind aber keine gleichmäßigen, sich wiederholende Strukturen aufweisen. Hierbei übernehmen die dickeren Strukturfasern eine Art Stützwirkung für die Filterstruktur, wobei die dünneren Strukturfasern die eigentliche, wesentliche Filterfunktion übernehmen. Dabei ist es möglich, dass sowohl die dickeren als auch die dünneren Strukturfasern aus dem gleichen Material bestehen. Zur Herstellung dieser Filterstruktur werden in ein Gerüst aus gröberen Strukturfasern feinere Strukturfasern beispielsweise durch Hydro-Verschlingungen oder durch Luft-Verschlingungen dispergiert. Alternativ kann ein feineres Gewebe aus thermoplastischen Strukturfasern gebildet werden um anschließend ein Gewebe mit gröberen Strukturfasern, zur Erreichung einer Filterstabilität einzubauen.

Weiter entstehen durch die verbundenen Strukturfasern Hohlräume in denen funktionelle Teilchen zur Realisierung der Sorptionswirkung eingefangen sind, welche selber durch die thermoplastischen Verbundfasern und einer zweiten, niedrig schmelzenden Komponente gebildet werden. Somit werden bei der thermischen Verbindung der Strukturfasern nicht nur die unregelmäßige und freie Verbindung der Strukturfasern, sondern durch unterschiedlich aufschmelzende Komponenten funktionelle Einlagerungen in den Hohlräumen erzeugt. Ähnlich langkettigen Molekülen, können auf diese Weise sehr große faserige Gerüste, ähnlich einem Fließ, hergestellt werden. Zur Erzeugung besonderer Effekte können die Strukturfasern aus gekräuselten Fasern bestehen, die analog zu vorher beschriebenen Vorgehensweisen verarbeitet werden können. Dieser faserige Aufbau kann eine höhere Dichte aber auch eine hohe innere Beweglichkeit und somit Verformbarkeit des Gerüstes bewirken. Die bei der thermischen Behandlung entstehenden funktionalen Teilchen können beispielsweise aus Aktivkohle bestehen, wobei auch andere funktionale Teilchen wie beispielsweise Siliziumdioxid, Zeolith Ton, Aluminiumoxid und weitere erzeugt und eingelagert werden können.

Ein Verfahren zum Drucken eines Gewebekonstrukts mit eingebetteter Vaskulatur wird in der WO 2015/069619 A1 beschrieben. Hierbei umfasst ein mittels eines 3D-Druckverfahrens hergestelltes Gewebekonstrukt ein oder mehrere Gewebemuster, wobei jedes Gewebemuster eine Vielzahl von Zellen eines oder mehrerer vorbestimmter Zelltypen umfasst. Ein Netzwerk von Gefäßkanälen durchdringt das eine oder andere Gewebemuster, wobei diese Durchdringungen bereits beim Herstellungsverfahren des Druckens in den dort verwendeten Filamenten eingebracht sein können.

Eine extrazelluläre Matrixzusammensetzung umgibt zumindest teilweise das eine oder die mehreren Gewebemuster und das Netzwerk von Gefäßkanälen. Bei dem hier verwendeten 3D-Druckverfahren können materialseitig gleiche sowie auch unterschiedliche Filamente verwendet werden, wobei diese Filamente beim 3D-Druckvorgang unter Verwendung spezieller Düsen gemischt werden können. Auch können Zusatzwerkstoffe wie Härter, Kleber usw. hierbei zugegeben werden. Teilweise sind besondere Zusatzwerkstoffe bereits als homogene Beimischungen oder als ständig verfügbare Beimischung innerhalb der Filamente eingebracht und bevorratet.

Ein gattungsgemäßes Filterelement ist aus der CN 105 041 529 A bekannt. Es weist einen vom Fluid durchströmbaren Filterelementkörper mit wenigstens einem Strukturkörper und einem Stützkörper auf, wobei der jeweilige Strukturkörper eine für das Fluid durchlässige Filterstruktur mit einer Vielzahl an Maschen/Poren aufweist, wobei die Filterstruktur als räumlich vernetzte Gitterstruktur ausgebildet ist und die räumlich vernetzte Gitterstruktur eine sich wiederholende Regelmäßigkeit aufweist, wobei die Maschen/Poren als Freiräume durch miteinander fest verbundene Gitterstäbe gebildet werden, wobei der Stützkörper eine für das Fluid durchlässige Stützstruktur aufweist, wobei der jeweilige Strukturkörper und der Stützkörper jeweils mittels eines 3D-Druckverfahrens hergestellt sind. Beim bekannten Filterelement wird für unterschiedliche Filterschichten ein pulverförmiges Rohmaterial verwendet. Ein ähnliches mehrschichtiges Filterelement ist aus der CN 108 568 160 A bekannt.

Die vorliegende Erfindung beschäftigt sich mit dem Problem, für ein Filterelement zur Partikelfiltration eine verbesserte Ausführungsform anzugeben, die sich insbesondere durch eine hohe Robustheit und hohe Filterwirkung, sowie durch eine hohe Tiefenbeladungskapazität bei ausreichend Stabilität auszeichnet.

Dieses Problem wird erfindungsgemäß durch den Gegenstand des unabhängigen Anspruchs gelöst. Vorteilhafte Ausführungen sind Gegenstand der abhängigen Ansprüche.

Erfindungsgemäß wird hierfür eine Filterstruktur mittels einer räumlich vernetzten Gitterstruktur verwendet, welche vorzugsweise komplett durch ein 3D-Druckverfahren hergestellt wird. Bei diesem 3D-Druckverfahren werden Filamente geschmolzen und über Düsen schichtweise auf einen Träger aufgebracht bzw. entlang eines Trägers aufgebaut, wobei das gedruckte Filterelement aus verschiedenen Filamenten und verschiedenen Filament-Materialien bestehen kann. Hierbei kann das Filament, beispielsweise ein drahtförmiges endloses Material mit speziellen Zusätzen sein, wobei anstelle des drahtförmigen Filaments auch ein pulverförmiges, granulatartiges oder flüssiges Material zur Verarbeitung in den Druckdüsen verwendet werden kann. Dieses 3D-Druckverfahren ermöglicht es auch komplizierte Formen für das Filterelement herzustellen, bei dem unter anderen auch hinterschnittene Formen möglich sind. Ebenso kann dieses Filterelement sehr komplizierte aneinander gefügte Formen aufweisen, was eine maximale Nutzung des zur Verfügung stehenden Einbauraums für das Filterelement bedeutet.

Auch kann somit die Ausgestaltung der Filtereinheit unter optimaler Nutzung dem für die Filtereinheit zur Verfügung stehenden Bauraum erfolgen und bisher nicht herstellbare geometrische Ausführungen von Filtereinheiten ermöglichen.

Entsprechend der Erfindung wird mittels dieses 3D-Druckverfahrens ein Stützkörper als Träger oder Traggerüst gedruckt, welches einen oder mehrere Strukturkörper, die als eigentliche Filter fungieren, stützen und somit dem gesamten Filterelement eine Formfestigkeit verleihen. Dieser Stützkörper kann an seiner äußeren sowie an seiner inneren Seite von wenigstens einem Strukturkörper kontaktiert werden, wobei die Strukturkörper, welche im Vergleich zum Stützkörper filigran und weniger formstabil ausgeführt sein können, durch den Kontakt zum Stützkörper, von diesem in ihrer Position und Form stabil gehalten werden.

Die Strukturkörper und der Stützkörper können hierbei zweckmäßig jeweils zusammenhängend aus einem Stück gefertigt sein, wobei auch Ausführungen aus einzelnen Teilen zur späteren Verbauung möglich sind. Hierbei weisen die Strukturkörper eine räumlich vernetzte Gitterstruktur auf, die aus sich regelmäßig wiederholenden Anordnungen von Stabelementen bestehen. Die Stabelemente sind dabei so unter vorgegebenen räumlichen Winkeln angeordnet, dass die Gitterstruktur entsteht und sich ebenfalls räumlich wiederholend Freiräume, sogenannte Maschen/Poren bilden. Diese Maschen/Poren können speziell zur Filterung von flüssigen Fluiden Kantenlängen von 0,05 - 15 mm, insbesondere von 0,1 - 10 mm, aufweisen, wobei die tatsächlichen Kantenlängen und die dadurch bestimmten Maschen- und Porenabmessungen auf das zu filternde Fluid optimal abgestimmt sind. Hierbei wird besonderer Wert auf die Durchströmungsgeschwindigkeit des Fluids, sowie die entstehende Druckdifferenz vom in das Filterelement eintretenden bis zum austretenden Fluid geachtet, damit die Filterwirkung maximal und eine mögliche Erwärmung des durchströmenden Fluids gering gehalten wird. Bei der Filterung von gasförmigen Fluiden sind die Kantenlängen der Maschen/Poren vorzugsweise im Bereich 0,1 - 40 mm, insbesondere von 4 - 20 mm, ausgelegt. Durch die Wahl der auf das zu filternde Fluid abgestimmten Maschen- und Porengrößen können die mittels des 3D-Druckverfahrens hergestellten Filterelemente doppelte Filterflächen entgegen den heute gebräuchlichen Filtereinsätzen aufweisen.

Die beim 3D-Druckverfahren der Strukturkörper verwendeten Filamente können bei der Erzeugung der Gitterstrukturen in den Filamenten eingelagerte Zusatzwerkstoffe wie Stabilisatoren, Kleber aber auch katalytisch wirkende Materialen enthalten. Aus diesen speziellen eingelagerten Materialien können beim Drucken der Stabelemente beispielsweise die katalytisch wirkenden Materialen so ausgeschieden werden, dass sich diese in den Freiräumen der Maschen/Poren sammeln und dort ihre spezielle katalytische Funktion in Kontakt mit dem zu filternden Fluid ausführen können. Selbstverständlich sind auch weitere geeignete Verfahren wie beispielsweise ein Ausschmelzen bestimmter Materialen oder weitere zur Einbringung dieser in die Maschen/Poren möglich.

Hierbei zeigen die zu filternden Fluide häufig eine koaleszierende Wirkung (hydrophob/oleophob) auf, bei der auszuscheidende/auszufilternde Anteile des Fluids und/oder Partikel als Verschmutzungsanteile zu größeren Partikeln/Tropfen zusammengeführt und geformt werden, welche dann durch die eigentliche Filterwirkung des Filterelements ausgeschieden werden.

Erfindungsgemäß sind der jeweilige Strukturkörper und der Stützkörper aus verschiedenen Materialien und/oder aus verschiedenen Materialzusammensetzungen 3D-gedruckt. Hierdurch lassen sich die Materialien an die unterschiedlichen Funktionen der beiden Komponenten anpassen, um die jeweilige Funktionalität zu verbessern.

Zweckmäßig können der jeweilige Strukturkörper und der Stützkörper jeweils aus Kunststoff und/oder aus Kunststoffmaterial 3D-gedruckt sein. Hierbei lassen sich besonders feine Strukturen realisieren. Außerdem ist das Filterelement dadurch vergleichsweise preiswert.

Vorteilhaft ist eine Ausführungsform, bei welcher die Struktur des Stützkörpers eine Zellenstruktur aufweist oder durch eine solche gebildet ist, wobei diese Zellenstruktur durch Zellen gebildete Durchlässe aufweist. Mit anderen Worten, die Zellen sind offen bzw. durchlässig ausgestaltet. Zusätzlich kann nun vorgesehen sein, dass die Maschen/Poren des jeweiligen Strukturkörper kleiner sind als die Zellen oder die Durchlässe des Stützkörpers. Hierdurch verbessern sich die Funktionalitäten von Strukturkörper und Stützkörper. Die kleineren Maschen/Poren verbessern die Filtrationswirkung. Die größeren Zellen erhöhen die Stabilität, insbesondere wenn damit eine vergrößerte Dicke der beteiligen Gitterstäbe einhergeht. Demnach kann insbesondere vorgesehen sein, dass Zellenstäbe zum Ausbilden der Zellenstruktur einen größeren Querschnitt aufweisen als Gitterstäbe zum Ausbilden der Gitterstruktur.

Gemäß einer Weiterbildung können die Zellen oder die Durchlässe des Stützkörpers mindestens zweimal oder fünfmal oder zehnmal größer sein als die Maschen/Poren des jeweiligen Strukturkörpers. Zusätzlich oder alternativ können die Zellenstäbe der Zellenstruktur einen zweimal oder fünfmal oder zehnmal größeren Querschnitt aufweisen als die Gitterstäbe der Gitterstruktur. Hierdurch lassen sich die Funktionalitäten von Strukturkörper und Stützkörper verbessern.

Besonders vorteilhaft ist eine Ausgestaltung, bei welcher die Struktur des Stützkörpers eine Zellenstruktur aufweist, die durch Zellen gebildete Durchlässe aufweist, wobei ein Teil der Gitterstäbe der Gitterstruktur in die Durchlässe der Zellenstruktur eindringt oder diese durchdringt. Hierdurch wirken die Elemente der Gitterstruktur und der Zellenstruktur zusammen. Dies ermöglicht einerseits eine sehr kompakte Bauform, da sich Striukturkörper und Stützkörper mehr oder weniger durchdringen. Andererseits kann dadurch auch eine gewisse Fixierung des Strukturkörpers am Stützkörper realisiert werden, was dessen Stützwirkung verbessert.

Gemäß einer Weiterbildung kann vorgesehen sein, dass ein Teil der Gitterstäbe der Gitterstruktur in die Durchlässe der Zellenstruktur so eindringt oder diese so durchdringt, dass die Gitterstruktur formschlüssig an der Zellenstruktur festgelegt ist. Dabei kann insbesondere vorgesehen sein, dass die Gitterstäbe die Zellenstruktur nicht oder nur lose berühren. Somit bleiben die Gitterstäbe gegenüber der Zellenstruktur beweglich. Alternativ können an den Kontaktstellen je nach Druckverfahren auch Stoffschlussverbindungen, insbesondere Schmelzverbindungen, vorliegen. Durch den Formschluss lässt sich der jeweilige Strukturkörper einfach durch den Stützkörper stabilisieren.

Wie bereits beschrieben können außerhalb und/oder innerhalb des Stützkörpers beispielsweise koaxial konzentrisch angeordnete Strukturkörper mit einer Gitterstruktur zur Anwendung kommen. Um die Formstabilität der Strukturkörper zu steigern können diese während des 3D-Druckverfahrens, durch in den Filamenten enthaltenen Kleber oder einen zusätzlich zugeführten Kleber, mit dem Stützkörper sowie auch mit weiteren Strukturkörpern verbunden werden. Auch bietet das 3D-Druckverfahren die Möglichkeit, verbindende Stabelemente untereinander zwischen dem Stützkörper und den Strukturkörpern, bzw. zwischen den einzelnen Strukturkörpern so zu platzieren, dass diese zumindest teilweise von diesen Stabelementen durchdrungen werden. Dadurch wird eine besonders hohe Festigkeit und Verbindung der Körper untereinander erreicht. Diese verbindenden Stabelemente können aus dem gleichen Material wie die Strukturkörper oder des Stützkörpers bestehen, wobei vorzugsweise zur Erhöhung der Festigkeit die verbindenden Stabelemente aus einem geeigneten Material höherer Festigkeit bestehen. Auch können diese verbindenden Stabelemente eine von der Gitterstruktur der Strukturkörper abweichende Form, Dicke und/oder geometrische Verbindungsstrukturen zu den Strukturkörpern aufweisen. So können am äußeren Bereich des Stützkörpers ein oder mehrere Strukturkörper angeordnet sein, bei denen die verbindenden Stabelemente sowohl innerhalb der Strukturkörper als auch auf den äußeren Bereichen der Strukturkörper verlaufen.

Eine weitere erfindungsgemäße Ausführungsform kann darin bestehen, dass die räumlich vernetzten Gitterstrukturen sprunghafte bzw. kontinuierliche Übergänge von verschieden großen Gitterstrukturen aufweisen und sich somit die Durchlässigkeit und die Filterfunktion verändern, bzw. angepasst werden können. Dies erfolgt beispielsweise in Abhängigkeit der Strömungsfunktion und/oder der Verteilung von zu filternden Partikelgrößen, was zu einer deutlichen Steigerung der Effektivität des Filterelements führt. Mit gleichem Änderungsverhalten kann auch eine sprunghafte und/oder kontinuierliche Veränderung des Materials der vernetzten Gitterstrukturen erfolgen. Diese zuvor beschriebenen Möglichkeiten der Veränderungen beziehen sich nicht nur auf die spezielle Verteilung der Gitterstrukturen und Materialen eines Strukturkörpers, sondern können auch bei benachbarten Strukturkörpern erfolgen, so dass mehrere äußere und/oder innere um einen Stützkörper angeordnete Strukturkörper eine Vielzahl von Veränderungen der Gitterstrukturen sowie der Materialen aufweisen können. All diese Veränderungen können selbstverständlich stufenlos fließend oder sprunghaft in Abschnitten erfolgen.

Für alle diese Variationen ist es ebenfalls möglich, dass bei benachbarten beispielsweise im Wesentlichen parallel oder koaxial konzentrisch angeordneten Strukturkörpern bezüglich deren Kontaktbereiche ein fließender Verbindungsübergang mit sich ändernden Gitterstrukturen und/oder Materialen erfolgt. So steht beispielsweise ein außerhalb angeordneter Strukturkörper mit seinem inneren Bereich in direkten Kontakt mit dem äußeren Bereich eines innerhalb angeordneten Strukturkörpers. In diesem Bereich können die zuvor beschriebenen Verbindungen beider Strukturkörper erfolgen. Gleiches gilt analog für im inneren Bereich des Stützkörpers angeordnete Strukturkörper. Auch ist es möglich, dass die inneren und äußeren Strukturkörper inklusive der zuvor beschriebenen Veränderungen zusammen mit dem Stützkörper als ein einstückiges Bauteil ausgeführt sein können.

Der Stützkörper übernimmt die Tragfunktion des gesamten Filterelements und ist daher besonders stabil ausgeführt. Hierzu ist es möglich, dass beim 3D-Druckverfahren des Stützkörpers ein Filament mit höherer Festigkeit verwendet wird. Weiter sind die Abmessungen und die Form des Stützkörpers an diese tragende Funktion durch stärker dimensionierte geometrische Ausführungen, insbesondere durch Zellenstrukturen angepasst. Bei der Formgebung des Stützkörpers können somit erfindungsgemäß Formen wie beispielsweise eine mehreckige Zellenstruktur, vorzugsweise als sechseckige Wabenstruktur mit deutlich verstärkter Wandstärke zum Einsatz kommen. Die verwendeten Gitterstrukturen können bedingt durch ihre Abmessungen und durch deren Maschendichte erhebliches Eigengewicht besitzen, was bei mehreren parallelen benachbarten Gitterstrukturen durch diese selber und deren Zusammenwirken nicht getragen werden könnten. Daher sind die Anforderungen an den Stützkörper entsprechend dieser Belastung auszulegen und zusätzlich an die wirkenden Kräfte des durchströmenden Fluids anzupassen, was über die Formgebung und die Dimensionierung des Stützkörpers und seiner Geometrie erfolgt. Der Stützkörper und die Strukturkörper können hierzu bereits gemeinsam verbunden und zusammen gedruckt werden. Einzeln gedruckte Stützkörper und Strukturkörper, welche anschließend zusammengefügt werden und dabei beispielsweise verklebt werden sind als weiteres Herstellverfahren möglich.

Als weitere Ausführung können entsprechend der Erfindung Strömungsführungselemente, sogenannte Leitkörper oder Flaps zur Anwendung kommen. Das bei der Herstellung des Stützkörpers und der Strukturkörper angewandte 3D-Druckverfahren ermöglicht erstmals derartige Leitkörper sowohl an den äußeren Bereichen der Strukturkörper als auch innerhalb der Strukturkörper in beliebiger Anzahl und Form vorzusehen. Hierbei können die Leitkörper vielfältige geometrische Formen aufweisen, wobei diese aber immer die Aufgabe erfüllen, das Fluid in seiner Strömungsrichtung gezielt zu lenken. Ein solcher Leitkörper kann also schaufelförmig, stufenförmig oder als gewundene Fläche zum Einsatz kommen, wobei auch Ausführungen in Kubusform zur Erzeugung eines Strömungswiderstandes zur Verwirbelung des Fluids oder zur Veränderung des Staudrucks denkbar sind. Die Leitkörper können hierbei so innerhalb der Gitterstrukturen der Strukturkörper angeordnet sein, dass diese in beliebiger räumlicher Anordnung und Anzahl von den Stabelementen der Gitterstruktur durchdrungen werden können. Auch ist es beim gemeinsamen Drucken von Strukturköpern und/oder Stützkörper möglich, dass diese Leitkörper übergreifend durch mehrere Strukturkörper angeordnet und ausgeführt sind. Durch diese übergreifende Verbindung der Strukturkörper/Stützkörper wird eine zusätzliche Versteifung der gesamten gedruckten Filtereinheit erreicht. Auf diese Weise können auch Regionen der Filterelemente, welche bisher eine ungünstige Durchströmung aufzeigten und deren Filterwirkung eingeschränkt ist optimal zur Filterung des Fluids genutzt werden. Bei gleicher Abmessung des Filterelements weist dieses eine deutliche Steigerung der Filtereffektivität auf. Weiter ist es durch den Einsatz der Leitkörper zusätzlich möglich, durch die gezielte Lenkung des Fluids, das Fluid bei entsprechenden Verschmutzungen, einen vorbestimmten Bereich des Filterelements mit besonders geeigneten Filterwirkungen zuzuführen. Bei einer entsprechenden Anordnung der Leitkörper im Zuflussbereich des Filterelements, also vor dem Einströmen des Fluids in den Strukturkörper, kann durch die Leitkörper ein Zykloneffekt erzeugt werden, bei dem das Fluid vor dem Strukturkörper kreisförmig verwirbelt wird. Durch diesen Effekt können gröbere und schwerere Verschmutzungspartikel sich an der Gehäusewand sammeln, so dass diese erst gar nicht in den Filter eindringen können. Diese gröberen Verschmutzungspartikel werden entlang der Gehäusewand an eine geeignete Sammelstelle geleitet, wo diese auch entnommen werden können. Dieses vorherige Aussortieren möglicher gröberer Verschmutzungspartikel ermöglicht eine deutlich längere Einsatzzeit des Filterelements. Auf diese Art kann das Fluid also gezielt durch mehrere Abschnitte/Bereiche des Filters gelenkt und somit optimal gefiltert werden.

Gemäß einer vorteilhaften Anwendung kann das Filterelement als Ringfilterelement ausgestaltet sein, bei dem der jeweilige Strukturkörper und der Stützkörper einen ringförmigen Ringfilterkörper oder zumindest einen ringförmigen Teil davon bilden, wobei das Filterelement bzw. das Ringfilterelement außerdem zwei Endscheiben aufweist, die jeweils an einem axialen Ende des Ringfilterkörpers angeordnet sind.

Mit anderen Worten, ein erfindungsgemäßes Ringfilterelement weist einen ringförmigen Ringfilterkörper auf, der zumindest teilweise durch ein Filterelement der vorstehend beschriebenen Art gebildet ist. Demensprechend sind der jeweilige Strukturkörper und der Stützkörper ringförmig ausgestaltet, insbesondere zylindrisch. Das Ringfilterelement weist außerdem an den axialen Enden des Ringfilterkörpers jeweils eine Endscheibe auf. Vorzugsweise besteht der Ringfilterkörper ausschließlich aus dem ringförmig ausgestalteten Filterelement, da der ringförmige Filterelementkörper durch die Stützstruktur ausreichend Stabilität besitzt für bestimmte Anwendungen, bei denen beispielsweise geringe bis mittlere Differenzdrücke zwischen Rohseite und Reinseite auftreten. Bei anderen Anwendungen, bei denen beispielsweise hohe Differenzdrücke zwischen Roh- und Reinseite auftreten, kann der Ringfilterkörper zusätzlich mit einer Innenzarge und/oder mit einer Außenzarge ausgestattet sein, an der das ringförmige Filterelement bzw. dessen ringförmiger Filterelementkörper radial abgestützt ist.

Zweckmäßig kann nun zumindest eine der Endscheiben als offene Endscheibe ausgestaltet sein und eine zentrale Durchtrittsöffnung aufweisen. Die andere Endscheibe kann je nach Anwendungsform des Ringfilterelements ebenfalls als offene Endscheibe oder aber als geschlossene Endscheibe ausgestaltet sein, die einen vom Ringfilterkörper umschlossenen Innenraum axial verschließt. Zweckmäßig können die Endscheiben an den Ringfilterkörper mittels 3D-Druck angedruckt sein. Die Endscheiben können dabei aus einem anderen Material, insbesondere aus einem anderen Kunststoff bestehen als der jeweilige Strukturkörper und der Stützkörper. Ferner ist denkbar, die Endscheiben und den Stützkörper aus dem gleichen Material herzustellen.

Eine erfindungsgemäße Ausführung ist als Weiterentwicklung in der Funktion einzelner Strukturkörper zu sehen. Hierbei kann beispielsweise der äußerste und/oder innerste Strukturkörper nicht mehr als Gitterstruktur ausgebildet sein, sondern als massiver Körper gedruckt werden und somit als Gehäusewand die geometrische Begrenzung der Filtereinheit selber darstellen. Da an ein Gehäuse höhere Festigkeitsanforderungen gestellt werden, kann beim gemeinsamen Strukturkörper und Gehäuse, oder einzelnen gedruckten Gehäuse ein hierzu geeignetes Material als Filament zur Anwendung kommen. Auch ist es denkbar, dass zur Erzielung dieser höheren Festigkeit besondere Materialen beim 3D-Drucken dem Filament im Moment des Druckens zusätzlich zugeführt werden.

Innerhalb dieser Gehäusewand kann das Filterelement in gewohnter, zuvor beschriebener Anordnung ausgeführt sein, wobei zwischen der Gitterstruktur eines inneren Strukturkörpers und der Innenseite der gedruckten Gehäusewand eine feste Verbindung bestehen kann. Selbstverständlich kann die Gehäusewand von dem inneren benachbarten Strukturkörper losgelöst ausgeführt und gedruckt werden, wobei das eigentliche Filterelement dann nachträglich in das Gehäuse eingebracht und dort fixiert werden muss. Dies kann beispielsweise über Anschläge die als Einschubbegrenzung dienen erfolgen, wobei das Filterelement bis zu diesen Anschlägen eingeschoben wird und anschließend durch ein geeignetes Verfahren, beispielsweise eine Thermoschmelzverfahren oder einem Kleben mit dem Gehäuse lagefixiert fest verbunden wird. Selbstverständlich können auch wieder lösbare Befestigungsverfahren, wie beispielsweise Verschraubungen, Spannringe, Clipse oder weitere, eingesetzt werden.

Das so gedruckte und mit einem Filterelement bestückte Gehäuse kann an seinen Enden, zur Erzeugung einer kompletten Filtereinheit, begrenzende Elemente in Formen von Befestigungsflanschen aufweisen. Bei diesen Befestigungsflanschen werden beim Drucken zeitgleich beispielsweise Befestigungsbohrungen sowie Ein- und Auslassöffnungen mit eingebracht. Um auch hier eine Austauschbarkeit des Filterelements zu ermöglich ist es denkbar, dass ein Befestigungsflansch lösbar mit dem Gehäuse verbunden ist. Somit kann das lose eingebrachte Filterelement ausgetauscht werden, während das Gehäuse wieder verwendet werden kann. Selbstverständlich ist auch ein kompletter Austausch der Filtereinheit möglich.

Bei der Variante der tauschbaren losen Filtereinheit können sowohl 3D-gedruckte Bauteile als auch heutige, standartmäßig hergestellten Bauteilen kombiniert verwendet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein hohlzylinderförmiges aus Stützkörper und Strukturkörpern auf-gebautes Filterelement,
- Fig. 2: einen hohlzylinderförmigen Stützkörper mit Zellenstruktur,
- Fig. 3: einen hohlzylinderförmigen Strukturkörper mit einer aus Stabelementen räumlich vernetzten Gitterstruktur,
- Fig. 4: ein hohlzylinderförmiges aus Stützkörper und Strukturkörpern aufgebautes Filterelement mit mehreren Abschnitten unterschiedlicher Gitterstrukturen,
- Fig. 5: ein hohlzylinderförmiges aus Stützkörper und Strukturkörpern aufgebautes Filterelement mit innerhalb und außerhalb der Gitterstruktur angeordneten Strömungsführungselementen/Leitkörpern,
- Fig. 6: eine 3D-gedruckte Filtereinheit bestehend aus Gehäuse, Flanschen und Filterelement.

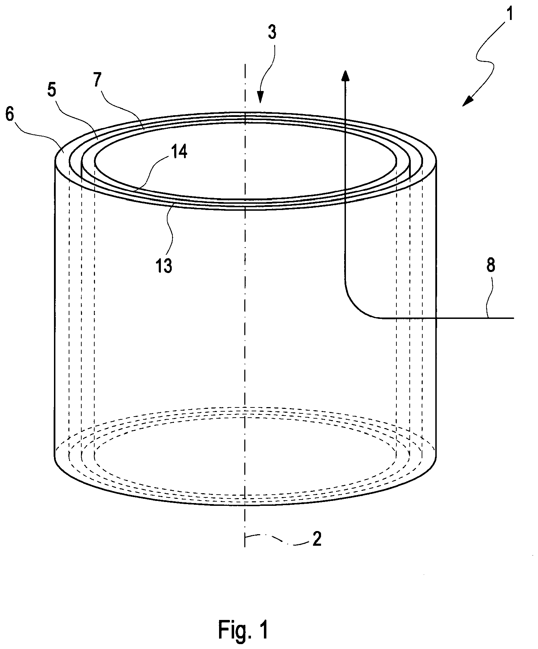

Figur 1 zeigt ein zylinderförmiges Filterelement 1, dessen Filterelementkörper 3 aus einem Stützkörper 5 und aus Strukturkörpern 6, 7 aufgebaut ist. Beim Filterelement 1 ist sowohl am inneren Bereich 14 als auch am äußeren Bereich 13 des Stützkörpers 5 ein korrespondierender, koaxial und konzentrisch positionierter hohlzylinderförmiger Strukturkörper 6, 7 angeordnet. Eine Durchströmung 8 des Fluids durch das Filterelement 1 erfolgt hier beispielsweise von der Außenseite des hohlzylinderförmigen Filterelements 1 in den inneren Bereich des hohlzylindrischen Filterelements 1 hinein, wonach das Fluid dann im Wesentlichen parallel zur Mittelachse 2 weitergeleitet wird. Selbstverständlich ist es möglich, dass Anstelle des hohlzylinderförmigen Filterelements 1, Filterelemente 1 mit Strukturkörpern 6 und Stützkörpern 5 in beliebiger geometrische Ausgestaltung zum Einsatz kommen können. Hierbei werden vorzugsweise flächige und/oder kubische Filterelemente 1 verwendet.

Der äußere Strukturkörper 6 ist als räumlich vernetzte Gitterstruktur 15 aufgebaut und wird mittels eines 3D-Druckverfahrens hergestellt und ist im Wesentlichen parallel zum Stützkörper 5 orientiert ausgerichtet. Der äußere Strukturkörper 6 steht mit seinem inneren Bereich 19 bereichsweise im direkten Kontakt mit dem äußeren Bereich 13 des Stützkörpers 5 und ist in diesem Kontaktbereich fest mit dem Stützkörper 5 verbunden. Diese Verbindung kann mittels einer Verklebung des Kontaktbereichs oder durch ein Stoffschlussverfahren der Kontaktbereiche erfolgen. Eine weitere Verbindungsmöglichkeit beider Körper 5, 6 -in den Figuren nicht dargestellt- besteht darin, dass die räumliche vernetzte Gitterstruktur 15, welche aus Stabelementen 16 besteht, mit den Stabelementen 16 durch die Struktur des Stützkörpers 5 greift und auf diese Weise die Verbindung beider Körper 5, 6 herstellt.

Sowie der äußere Strukturkörper 6 mit seinem inneren Bereich 19 in Kontakt mit dem äußeren Bereich 13 des Stützkörpers 5 steht trifft die analoge Betrachtung auf den äußeren Bereich 18 der Gitterstruktur 15 des inneren Strukturkörpers 7 und dem wenigstens bereichsweise kontaktierten inneren Bereich 14 des Stützkörpers 5 zu. Ebenso ist die räumliche Vernetzung der Stabelemente 16 durch die Zellenstruktur 10 des Stützkörpers 5 zur Verbindung beider Körper 5, 7 möglich, wobei die Zellenstruktur 10 eine räumliche Wabenstruktur 11 aufweist, aber auch sonstige Formen jeglicher Art aufweisen kann.

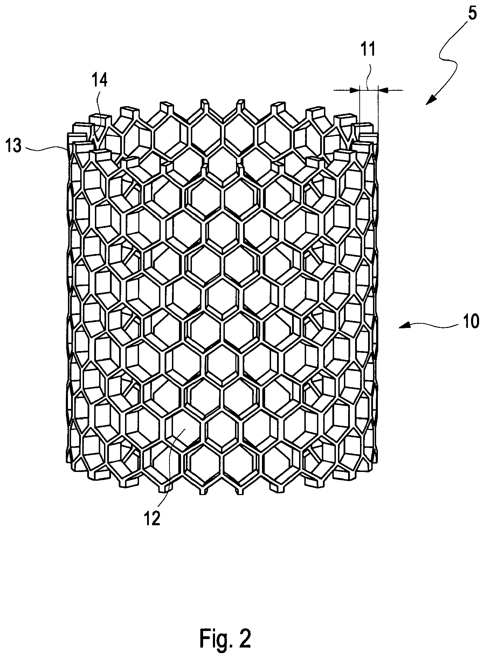

In der Fig. 2 erfolgt die Vernetzung und die gegenseitige formstabile Verbindung beider Körper 6, 7 durch den Durchgriff der Stabelemente 16 der Gitterstruktur 15 durch Zellen der Zellenstruktur 10 des Stützkörpers 5, wobei der Durchgriff am Stützkörper 5 durch den Freiraum der Zellenstruktur 10 oder durch die Wandungen der Zellenstruktur 10, hindurch erfolgt. Da der Stützkörper 5 als Tragkörper beispielsweise mehrere Gitterstrukturen 15 halten und stützen muss und zusätzlich noch die durch das fließende Fluid entstehenden Kräfte aufnehmen muss, ist der Stützkörper 5 in einer sehr stabilen Form ausgeführt. Im gezeigten Beispiel weist der Stützkörper 5 eine wabenförmige Struktur, nämlich die Zellenstruktur 10 auf, welche zwecks der Kräfteabstützung eine größere Materialfestigkeit und Wandstärke 11 der Wabenstruktur 10 aufweist. Das bedeutet, dass stangenförmige Zellenstäbe der Zellenstruktur 10 einen größeren Querschnitt besitzen als die Gitterstäbe 16 der Gitterstruktur 15. Auch ist es möglich, dass beim Drucken des Stützkörpers 5 ein Filament-Material mit höherer Festigkeit verwendet wird und/oder während des 3D-Druckvorgangs der Zellenstruktur 10 besondere, festigkeitssteigernde Materialbestandteile in die Schmelze des Filaments eingebracht werden. Die Wahl einer möglichen Zellenstruktur 10, hier einer sechseckigen Wabenstruktur 10, stützt die Kräfte besonders günstig ab und erzeugt gleichzeitig ausreichend große und regelmäßige Durchlässe 12 für das durchströmende Fluid und die durch diese Durchlässe 12 verlaufenden Stabelemente 16, welche als Verbindungen zwischen dem Stützkörper 5 und dem äußeren Strukturkörper 6, oder als Verbindung eines inneren Strukturkörpers 7 mit dem äußeren Strukturkörper 6 durch den Stützkörper 5 hindurch dienen. Die durch die Durchlassöffnungen 12 des Stützkörpers 5 ragenden Stabelemente 16 können direkt durch die Durchlassöffnung 12 verlaufen und/oder Bereiche der Wabenstruktur 10 durchdringen und sind somit fest mit dieser verbunden. Diese Durchdringung der Stabelemente 16 und der Zellenstruktur 10 verstärken die Verbindung zusätzlich.

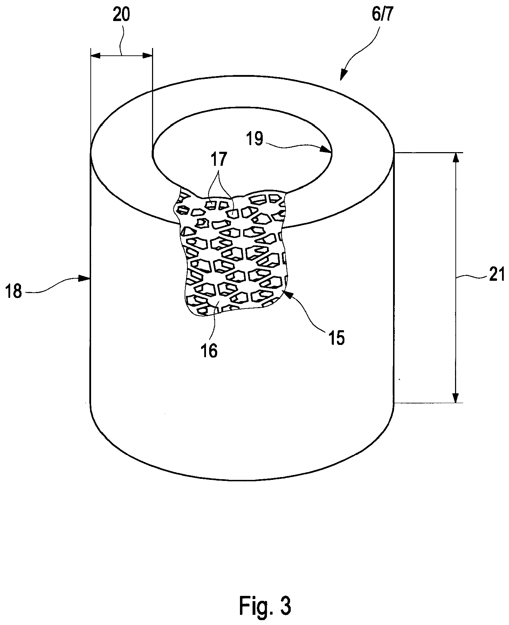

Ein hohlzylinderförmiger Strukturkörper 6, 7 mit einer aus Stabelementen bzw. Gitterstäben 16 räumlich vernetzt aufgebauten Gitterstruktur 15 ist in Fig. 3 abgebildet. Die Stabelemente 16 sind hierbei stern- und strahlenförmig in einer Vielzahl sich derartig wiederholender Anordnungen kombiniert und miteinander verkettet angeordnet. Der hier abgebildete Hohlzylinder zeigt diese vernetzte Struktur in seiner Längserstreckung 21 als auch in seiner Breite 20 auf, so dass ein räumlich vernetzter, hohlzylinderförmiger Strukturkörper 6, 7 entsteht.

Durch die räumlich vernetzte Gitterstruktur 15 erzeugen die sternförmig angeordneten Stabelemente 16 Freiräume, welche als Maschen 17 oder Poren 17 so angeordnet und orientiert sind, dass das zu filternde Fluid optimal den Strukturkörper 6, 7 durchströmen kann. Verunreinigungen werden dabei in den Maschen/Poren 17, bzw. an den Stabelementen 16 zurückgehalten, wobei der sich mit Verunreinigungen füllende Strukturkörper 6, 7 durch die große Anzahl an Maschen/Poren 17 lange eine ausreichende Durchströmung 8 des Strukturkörpers 6, 7 gewährleistet, ohne das der ansteigende Staudruck beim Durchströmen 8 des Strukturkörpers 6, 7 kritische Werte erreicht. Am inneren 14 bzw. äußeren Bereich 13 des Strukturkörpers 6, 7 ist die Gitterstruktur 15 mit einem Kleber zur Verbindung mit weiteren koaxial ineinander, vorzugsweise konzentrisch angeordneten Strukturkörpern 6, 7 versehen. Dieser Kleber kann beispielsweise als Zusatzwerkstoff mit dem Filament beim Druckvorgang in diesen Bereichen positioniert worden sein, wobei auch eine nachträgliche Kleberbeschichtung dieses inneren 14 und äußeren Bereichs 13 möglich ist. Ebenso ist es möglich, dass beim 3D-Druckverfahren mit den Filamenten oder als zusätzlich zugeführtes Material Stoffe in die Gitterstruktur 15 eingebracht werden, die sich konzentriert in den Maschen/Poren 17 ansammeln um dort spezielle Reaktionen und/oder katalytische Wirkungen des zu filternden Fluids erzeugen. Diese können unter anderem dazu geeignet sein, dass bestimmte Verunreinigungen dauerhaft an den Stabelementen 16 anhaften und/oder im Fluid vorhandene Stoffe aneinander fügen/ketten und diese somit durch die Gitterstruktur 15 als Verunreinigung herausgefiltert werden können.

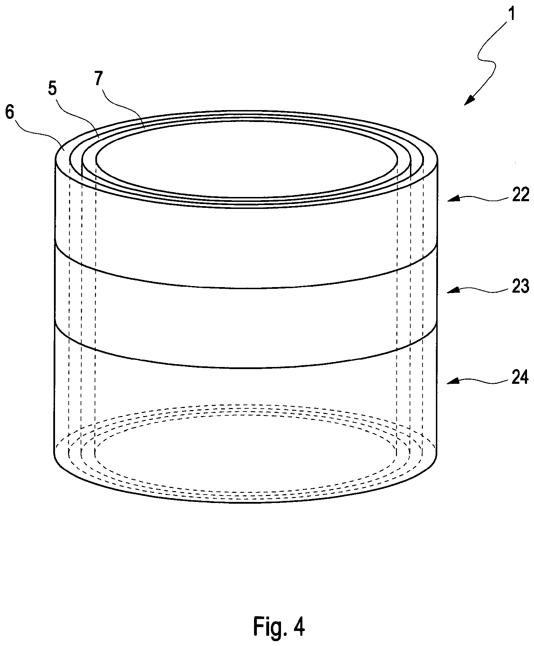

In Fig. 4 ist ein hohlzylinderförmiges aus Stützkörper 5 und Strukturkörpern 6, 7 aufgebautes Filterelement 1 mit mehreren Abschnitten 22, 23, 24 unterschiedlicher Gitterstrukturen 15 des Strukturkörpers 6, 7 dargestellt. Die Strukturkörper 6, 7 sind hierbei koaxial, insbesondere konzentrisch ineinander angeordnet, wobei der Stützkörper 5 zwischen den beiden Strukturkörpern 6, 7 positioniert ist.

Die Strukturkörper 6, 7 können beispielsweise in ihrer Längserstreckung 21 in mehrere Abschnitte, hier in drei Abschnitte 22, 23, 24, aufgeteilt sein. Bei diesen Aufteilungen bestehen die Abschnitte 22, 23, 24 beispielsweise aus unterschiedlichen Materialien und/oder ist die Gitterstruktur 15 in ihre Anzahl der ausgeführten Stabelemente 16 oder der Anzahl der Maschen/Poren 17 unterschiedlich. So ist es möglich, dass in einem ersten Abschnitt 22 eine grobmaschige, aus wenigen Stabelementen 16 bestehende Gitterstruktur 15, abgebildet ist und der an diesen Abschnitt 22 angrenzenden Abschnitt 23 eine feinere Gitterstruktur 15, mit mehreren kürzeren Stabelementen 16, als im Abschnitt 22 vorhanden aufweist.

Analog kann der darauf folgende Abschnitt 24 über eine weitere, deutlich unterscheidende Gitterstruktur 15 verfügen.

Die Übergänge zwischen den einzelnen Abschnitten 22, 23, 24 und den unterschiedlichen Gitterstrukturen 15 können hierbei sprungartig oder kontinuierlich fließend erfolgen. Diese abschnittsweise Aufteilung eines Strukturkörpers 6, 7 kann, wie zuvor erwähnt, in weiteren konzentrisch angeordneten Strukturkörpern 6, 7 und/oder auch in radiale Abschnitte hier nicht abgebildet aufgegliedert sein. Auch hier können grobe auf weniger grobe Gitterstrukturen 15 folgen und diese können selbstverständlich auch sprunghafte und/oder kontinuierliche fließende Übergänge aufweisen. Dabei ist es unerheblich, ob die Strukturkörper 6, 7 als einzelne Gitterstrukturen 15 oder aus zusammen verbundenen Gitterstrukturen 15 und somit aus mehreren verbundenen Strukturelementen 6, 7 bestehen.

Die Aufteilung in unterschiedliche Abschnitte 22, 23, 24, wobei die Abschnitte 22, 23, 24 unabhängig voneinander und unterschiedlich in ihren Abmessungen dimensioniert sein können, ist für eine optimale Filterung des Fluids wichtig. So können beispielsweise Bereiche des Strukturkörpers 6, 7 welche weniger intensiv vom Fluid durchströmt werden, durch eine Veränderung des Staudrucks mittels größeren oder kleinerer Maschen/Poren 17 und weniger oder mehreren Stabelementen 16 optimal vom Fluid durchströmt werden und dadurch effizient das Fluid filtern.

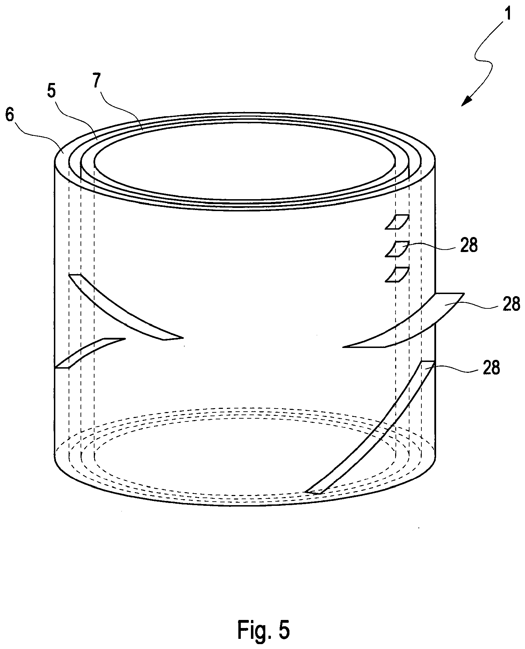

Die Fig. 5 zeigt ein hohlzylinderförmiges aus Stützkörper 5 und Strukturkörpern 6, 7 aufgebautes Filterelement 1, bei dem die Strukturkörper 6, 7 koaxial, vorzugsweise konzentrisch zueinander angeordnet sind. Im Bereich der Stützkörper 5 sind Strömungsführungselemente 28, sogenannte Leitkörper/Flaps 28 in die Gitterstrukturen 15 der Strukturkörper 6, 7 integriert. Diese Leitkörper 28 werden innerhalb oder außerhalb der Gitterstrukturen 15 der Strukturkörper 6, 7 während des 3D-Druckvorgangs gedruckt.

Ein solcher, am Randbereich des Gitterkörpers 15 positionierter Leitkörper 28 kann das zu filternde Fluid durch seine geometrische Formgebung und Positionierung gezielt in oder an bestimmte Bereiche des Gitterkörpers 15 leiten, so dass die zuvor beschriebene optimale Durchströmung 8 und Filterwirkung des Filterelements 1 erreicht wird. Ein hierbei möglicher Effekt kann beispielsweise ein kreisförmiges, Verwirbeln des Fluids in Form bzw. nach Art eines Zyklons darstellen. Beim Durströmen 8 der Strukturkörper 6, 7 kann das gezielte Lenken des Fluids auch durch innerhalb der Gitterkörpers 15 angeordnete und entsprechend geformten Leitkörpern 28 erzielt werden. Auch diese inneren Leitkörper 28 werden direkt beim 3D-Drucken des Gitterkörpers 15 mit in diese eingebracht bzw. gedruckt.

Weiter können die Leitkörper 28 sowohl innerhalb des Gitterkörpers 15 als auch zwischen zwei oder mehreren Gitterkörpern 15 angeordnet sein. Somit kann das in einem Gitterkörper 15 einströmende Fluid durch die übergreifenden angeordneten Leitkörper 28 sehr effektiv und schnell in weitere Gitterkörper 15 geleitet, bzw. in diese verteilt werden. Auch können durch mehrere einander zugeordnete Leitkörper 28 das Fluid in wechselnde Richtungen und somit in unterschiedliche Filterbereiche gelenkt werden. Hierzu sind die Leitkörper 28 als flächig gebogene, gewundene, sich vergrößernde oder verkleinernde Flächen ausgelegt, wobei auf oder an den Leitkörpern 28 zusätzliche An- oder Ausformungen zur Unterstützung der Leitfunktion des Fluids vorhanden sein können.

Anstelle der flächigen Leitkörper 28 können auch geometrische massive Körper, beispielsweise in Kubusform, in die Gitterkörper 15 eingebracht werden und als Strömungswiderstand vom Fluid umflossen werden. Hierbei entstehen Verwirbelungen die wiederum das Strömungsverhalten des Fluids so beeinflussen, dass dieses dadurch gezielt in bestimmte Bereiche des Filterelements 1 und in die Gitterkörper 15 gelenkt wird.

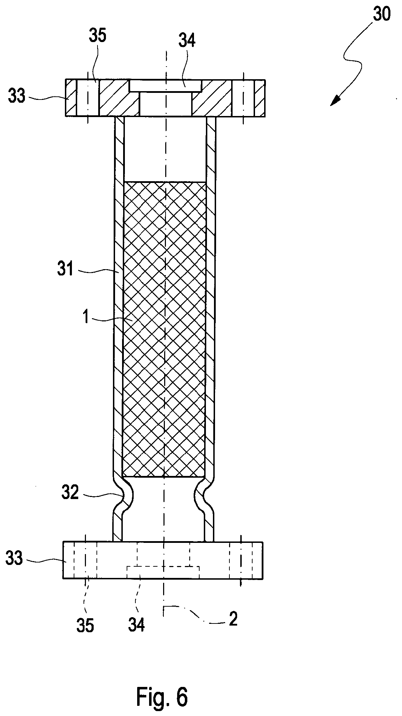

In Fig. 6 ist eine 3D-gedruckte Filtereinheit 30 mit Gehäuse 31, Flanschen 33 und einem Filterelement 1 dargestellt. Hierbei wird, während des 3D-Druckvorgangs, beispielsweise der äußerste Strukturkörper 6 nicht als Gitterkörper 15 sondern als massiver Körper in Form einer Gehäusewand 31 gedruckt. Das in Fig. 6 abgebildete Gehäuse 31 entspricht im Wesentlichen der geometrischen Formgebung des Filterelements 1 und ist als dieses massiv aufgebaut. Auch kann das Gehäuse 31 mit dem Filterelement 1 zeitgleich und als einstückiges Bauteil gedruckt werden. An den Enden des Gehäuses 31 sind Befestigungsflansche 33 ausgeformt, die beispielsweise zur Montage der Filtereinheit 30 an einer Maschine dienen. Die Flansche 33 sind hierzu mit Befestigungsbohrungen 35 zur Montage mittels geeigneten Befestigungsmitteln ausgeführt und weisen entsprechende Ein- und Auslassöffnungen 34 für den Zufluss bzw. Abfluss des Fluids auf. Sowohl die Befestigungsbohrungen 35 als auch die Ein- und Auslassöffnungen 34 werden während des 3D-Druckverfahrens entsprechend ausgeformt. Auf dies Weise kann eine komplette Filtereinheit 30 mit Filterelement 1, Gehäuse 31 und Befestigungsflanschen 33 als vollständig gedruckte Ausführung verwendet und ausgetauscht werden. Das Gehäuse 31 besteht hierbei vorteilhaft aus einem Material mit größerer Festigkeit, was während des Druckvorgangs mittels entsprechend geeigneten Filamenten erzeugt wird. Weiter ist es denkbar, dass dem hierbei verwendeten Filament entsprechende Zusatzwerkstoffe zur Steigerung der Festigkeit zugeführt werden.

Eine mögliche weitere Ausführungsform besteht darin, dass das Gehäuse 31 als eigenständiges Bauteil ohne ein Filterelement 1 mittels eines 3D-Druckverfahren hergestellt wird. Dabei wird das Filterelement 1 zu einem späteren Zeitpunkt in das Gehäuse 31 eingebracht und positioniert.

Zur Positionierung kann, während des 3D-Druckvorgangs, ein Anschlag 32 bzw. eine Einschubbegrenzung 32 in oder an dem Gehäuse 31 ausgeformt werden. Das eingeschobene Filterelement 1 kann im Gehäuse 31 fixiert werden, wobei hier auch der Flansch 33 von der Einschubseite aus als Fixierung dienen kann. Die Befestigungsflansche 33 sind auch hier wieder am Gehäuse 31 angebracht, wobei ein Flansch zur Montage des Filterelements 1 demontierbar ausgeführt ist. Anstelle des gedruckten Gehäuses 31 kann das vorher hergestellte Filterelement 1 selbstverständlich in ein gebräuchliches, vorhandenes Gehäuse 31 eingeschoben werden, wobei statt dem Gehäuse 31 auch eine geeignete Stelle in einer Rohrleitung verwendet werden kann. Somit ist es beispielsweise möglich, solche Filterelemente 1 an beinahe beliebiger Stelle eines Rohrsystems einer Maschine/Motor verwenden zu können.

Dieser demontierbare Flansch 33 wird nachträglich mit dem Gehäuse 31 mittels einer geeigneten Verbindung wieder lösbar oder fest verbunden. Der besondere Vorteil für ein derartig, 3D-gedrucktes Gehäuse 31 einer Filtereinheit 30 besteht darin, dass das Gehäuse 31 in seiner Form und Abmessungen von bekannten symmetrischen Formen abweichen kann und komplexe Gehäuse 31, mit sich häufig ändernden Formverläufen, ausgeführt werden können. Die hierbei zu verwendenden Filterelemente 1 entsprechen korrespondierend dieser Gehäuseform. Speziell bei diesen Filterelementen 1 mit mehrfach ändernden Formen sind die in Fig. 5 beschriebenen Leitkörper 28 von besonderem Interesse, damit alle wichtigen Bereiche des Filterelements 1 effektiv durchströmt werden können.

Grundsätzlich können der jeweilige Strukturkörper 6, 7 und der Stützkörper 5 aus verschiedenen Materialien und/oder Materialzusammensetzungen 3D-gedruckt sein. Dabei können der jeweilige Strukturkörper 6, 7 und der Stützkörper 5 jeweils aus Kunststoff und/oder Kunststoffmaterial 3D-gedruckt sein.

Bevorzugt ist eine Ausgestaltung, bei der die Struktur des Stützkörpers 5 eine Zellenstruktur 10 aufweist, die durch Zellen gebildete Durchlässe 12 aufweist. Dabei sind die Zellen mit stangenförmigen Zellenstäben der Zellenstruktur 10 gebildet. Vorzugsweise sind die Maschen/Poren 17 des jeweiligen Strukturkörper 6, 7 kleiner als die Zellen oder die Durchlässe 12 des Stützkörpers 5. Beispielsweise können die Zellen oder die Durchlässe 12 des Stützkörpers 5 mindestens zweimal oder fünfmal oder zehnmal größer sein als die Maschen/Poren 17 des jeweiligen Strukturkörper 6, 7.

Ferner kann vorgesehen sein, dass die Gitterstäbe 16 der Gitterstruktur 15 des jeweiligen Strukturkörpers 6, 7 einen kleineren Querschnitt aufweisen als Zellenstäbe der Zellenstruktur 10 des Stützkörpers 5. Beispielsweise kann der Querschnitt der Zellenstäbe der Zellenstruktur 10 des Stützkörpers 5 mindestens zweimal oder fünfmal oder zehnmal größer sein als der Querschnitt der Gitterstäbe 16 der Gitterstruktur 15 des jeweiligen Strukturkörpers 6, 7.

Wie weiter oben erläutert kann ein Teil der Gitterstäbe 16 der Gitterstruktur 15 in die Durchlässe 12 der Zellenstruktur 10 eindringen oder diese durchdringen. Bevorzugt kann ein Teil der Gitterstäbe 16 der Gitterstruktur 15 in die Durchlässe 12 der Zellenstruktur 10 so eindringen oder diese so durchdringen, dass die Gitterstruktur 15 formschlüssig an der Zellenstruktur 10 festgelegt ist. Eine weitere zusätzliche Fixierung durch Schmelzverbindungen kann dann entbehrlich sein.

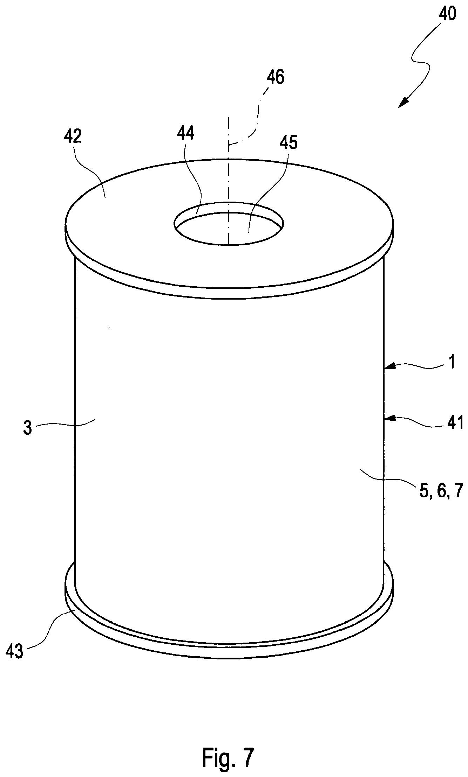

Gemäß Fig. 7 kann das Filterelement 1 als Ringfilterelement 40 ausgestaltet sein, bei dem der jeweilige Strukturkörper 6, 7 und der Stützkörper 5 einen ringförmigen Ringfilterkörper 41 bilden. Mit anderen Worten, in diesem Fall ist der Filterelementkörper 3 ringförmig ausgestaltet und bildet besagten Ringfilterkörper 41. Das Filterelement 1 bzw. das Ringfilterelement 40 weist außerdem zwei Endscheiben 42, 43 auf, die jeweils an einem axialen Ende des Ringfilterkörpers 41 angeordnet sind. Die in Fig. 7 obere Endscheibe 42 ist als offene Endscheibe ausgestaltet und weist demnach eine zentrale Durchtrittsöffnung 44 auf, die zu einem vom Ringfilterkörper 41 umschlossenen Innenraum 45 hin offen ist. Die in Fig. 7 untere Endscheibe 43 kann ebenfalls als offene Endscheibe ausgestaltet sein. Alternativ kann die untere Endscheibe 43 auch als geschlossene Endscheibe ausgestaltet sein, die den Innenraum 45 axial verschließt. Zumindest eine der Endscheiben 42, 43 kann mittels 3D-Druck an den Ringfilterkörper 41 angedruckt sein.

Fig. 7 zeigt demnach ein Ringfilterelement 40 insbesondere für eine Filtereinheit 30 zum Filtern eines Fluids, wobei das Ringfilterelement 40 mit einem ringförmigen Ringfilterkörper 41, der durch ein Filterelement 1 der vorstehend beschriebenen Art gebildet ist, und mit zwei Endscheiben 42, 43 ausgestattet ist, die jeweils an einem axialen Ende des Ringfilterkörpers 41 angeordnet sind. Im Betrieb des Ringfilterelements 40 ist der Ringfilterkörper 41 radial durchströmt. Durch die Durchtrittsöffnung 44 kann - je nach Durchströmungsrichtung - gereinigtes Fluid abgeführt oder ungereinigtes Fluid zugeführt werden. Die Axialrichtung des Ringfilterelements 40 ist durch dessen Längsmittelachse 46 definiert.

## Patentansprüche

1. Filterelement (1) für eine Filtereinheit (30) zum Filtern eines Fluids,
- wobei das Filterelement (1) einen vom Fluid durchströmbaren Filterelementkörper (3) mit wenigstens einem Strukturkörper (6, 7) und einem Stützkörper (5) aufweist,
- wobei der jeweilige Strukturkörper (6, 7) eine für das Fluid durchlässige Filterstruktur mit einer Vielzahl an Maschen/Poren (17) aufweist,
- wobei die Filterstruktur als räumlich vernetzte Gitterstruktur (15) ausgebildet ist und die räumlich vernetzte Gitterstruktur (15) eine sich wiederholende Regelmäßigkeit aufweist,
- wobei die Maschen/Poren (17) als Freiräume durch miteinander fest verbundene Gitterstäbe (16) gebildet werden,
- wobei der Stützkörper (5) eine für das Fluid durchlässige Stützstruktur aufweist,
- wobei der jeweilige Strukturkörper (6, 7) und der Stützkörper (5) jeweils mittels eines 3D-Druckverfahrens hergestellt sind,
**dadurch gekennzeichnet**,
der jeweilige Strukturkörper (6, 7) und der Stützkörper (5) aus verschiedenen Materialien und/oder Materialzusammensetzungen 3D-gedruckt sind.

2. Filterelement (1) nach Anspruch 1,
**dadurch gekennzeichnet**,
der jeweilige Strukturkörper (6, 7) und der Stützkörper (5) jeweils aus Kunststoff und/oder Kunststoffmaterial 3D-gedruckt sind.

3. Filterelement (1) nach einem der vorhergehenden Ansprüche,
**dadurch gekennzeichnet,**
- **dass** die Struktur des Stützkörpers (5) eine Zellenstruktur (10) aufweist, die durch Zellen gebildete Durchlässe (12) aufweist, wobei die Maschen/Poren (17) des jeweiligen Strukturkörpers (6, 7) kleiner sind als die Zellen oder die Durchlässe (12) des Stützkörpers (5), und/oder
- **dass** die Struktur des Stützkörpers (5) eine Zellenstruktur (10) aufweist, die durch Zellen gebildete Durchlässe (12) aufweist, wobei Gitterstäbe (16) der Gitterstruktur (15) des jeweiligen Strukturkörpers (6, 7) einen kleineren Querschnitt aufweisen als Zellenstäbe der Zellenstruktur des Stützkörpers (5).

4. Filterelement (1) nach Anspruch 3,
**dadurch gekennzeichnet,**
- **dass** die Zellen oder die Durchlässe (12) des Stützkörpers (5) mindestens zweimal oder fünfmal oder zehnmal größer sind als die Maschen/Poren (17) des jeweiligen Strukturkörpers (6, 7), und/oder
- **dass** der Querschnitt der Zellenstäbe der Zellenstruktur des Stützkörpers (5) mindestens zweimal oder fünfmal oder zehnmal größer sind als der Querschnitt der Gitterstäbe (16) der Gitterstruktur (15) des jeweiligen Strukturkörpers (6, 7).

5. Filterelement (1) nach einem der vorhergehenden Ansprüche,
**dadurch gekennzeichnet,**
- **dass** die Struktur des Stützkörpers (5) eine Zellenstruktur (10) aufweist, die durch Zellen gebildete Durchlässe (12) aufweist,
- **dass** ein Teil der Gitterstäbe (16) der Gitterstruktur (15) in die Durchlässe (12) der Zellenstruktur (10) eindringen oder diese durchdringen.

6. Filterelement (1) nach Anspruch 5,
**dadurch gekennzeichnet,**
**dass** ein Teil der Gitterstäbe (16) der Gitterstruktur (15) in die Durchlässe (12) der Zellenstruktur (10) so eindringen oder diese so durchdringen, dass die Gitterstruktur (15) formschlüssig an der Zellenstruktur (10) festgelegt ist.

7. Filterelement nach einem der Ansprüche 3 bis 6,
**dadurch gekennzeichnet,**
- **dass** nur ein einziger Strukturkörper (6, 7) vorgesehen ist, wobei die Zellenstruktur des Stützkörpers (5) im Inneren der Gitterstruktur (15) dieses Strukturkörpers (6, 7) angeordnet ist, wobei einige der Gitterstäbe (16) die Zellen durchdringen, oder
- **dass** zwei koaxial ineinander angeordnete Strukturkörper (6, 7) vorgesehen sind und der Stützkörper (5) zwischen den beiden Strukturkörpern (6, 7) angeordnet ist, wobei einige der Gitterstäbe (16) die Zellen der Zellenstruktur (10) des Stützkörpers (5) durchdringen und die beiden Strukturkörper (6, 7) miteinander verbinden.

8. Filterelement (1) nach einem der vorhergehenden Ansprüche,
**dadurch gekennzeichnet,**
- **dass** der jeweilige Strukturkörper (6, 7) und der Stützkörper (5) hohlzylinderförmig ausgestaltet und koaxial ineinander, vorzugsweise konzentrisch zueinander angeordnet sind, wobei der jeweilige Strukturkörper (6, 7) und der Stützkörper (5) wenigstens annähernd parallel zueinander angeordnet sind, und/oder
- **dass** der jeweilige Strukturkörper (6, 7) fest mit dem Stützkörper (5) verbunden ist, wobei die feste Verbindung zwischen den jeweiligen Strukturkörpern (6, 7) und dem Stützkörper (5) durch eine Stoffschlussverbindung gebildet ist.

9. Filterelement (1) nach einem der vorhergehenden Ansprüche,
**dadurch gekennzeichnet,**
- **dass** an zwei koaxial ineinander angeordneten Strukturkörpern (6, 7) weitere Strukturkörper (6, 7) vorgesehen sind,
- **dass** ein weiterer Strukturkörper (6) mit seinem inneren Bereich (19) in direktem Kontakt mit dem äußeren Bereich (18) des Strukturkörpers (7) steht und mit diesem fest verbunden ist,
- **dass** ein weiterer Strukturkörper (7) mit seinem äußeren Bereich (18) in direktem Kontakt mit dem inneren Bereich (19) des Strukturkörpers (7) steht und fest mit diesem verbunden ist,
- **dass** insbesondere vorgesehen sein kann, dass sich die Strukturkörper (6, 7) untereinander über ihre äußeren Bereiche (18) und inneren Bereiche (19) wenigstens bereichsweise übergreifend durchdringen.

10. Filterelement (1) nach einem der vorhergehenden Ansprüche
**dadurch gekennzeichnet,**
- **dass** innerhalb der durch die vernetzten und fest verbundenen Gitterstäbe (16) gebildeten Maschen/Poren (17) reaktive bzw. katalytisch auf das Fluid wirkende Materialen/Stoffe eingebettet sind, wobei das zu filternde Fluid eine koaleszierende Wirkung zur Bildung abscheidefähiger Partikel aufweist, und/oder
- **dass** die durch die verbundenen Gitterstäbe (16) gebildeten Maschen/Poren (17) des Stützkörpers (5) zur Filtration von flüssigen Fluiden jeweils Kantenlängen von 0,05 mm bis 15 mm, vorzugsweise von 0,1 mm bis 10 mm, aufweisen, oder zur Filtration von gasförmigen Fluiden jeweils Kantenlängen von 0,1 mm bis 40 mm, vorzugsweise von 4 mm bis 20 mm, aufweisen.

11. Filterelement (1) nach einem der vorangehenden Ansprüche,
**dadurch gekennzeichnet,**
- **dass** mehrere benachbarte Strukturkörper (6, 7) zueinander unterschiedliche vernetzte Gitterstrukturen (15) aufweisen,
- **dass** mehrere benachbarte Strukturkörper (6, 7) zueinander unterschiedliche Materialeigenschaften der vernetzten Gitterstrukturen (15) aufweisen,
- **dass** die zueinander unterschiedlichen vernetzten Gitterstrukturen (15) und die zueinander unterschiedlichen Materialeigenschaften der vernetzten Gitterstrukturen (15) sich sprungartig oder kontinuierlich verändern,
- **dass** insbesondere vorgesehen sein kann, dass der jeweilige Strukturkörper (6, 7) und der Stützkörper (5) jeweils aus einem Stück gefertigt sind.

12. Filterelement (1) nach einem der vorangehenden Ansprüche,
**dadurch gekennzeichnet,**
- **dass** an und/oder innerhalb der Strukturkörper (6, 7) und des Stützkörpers (5) Strömungsführungselemente/Leitkörper (28) ausgebildet sind,
- **dass** die Strömungsführungselemente/Leitkörper (28) übergreifend auf weitere Strukturkörper (6, 7) und oder den Stützkörper (5) ausgebildet sind,
- **dass** die Strömungsführungselemente/Leitkörper (28) eine ebene und/oder gekrümmte und/oder gewundene Form aufweisen,
- **dass** sich die Strömungsführungselemente/Leitkörper (28) in ihrer Formgebung sprungartig oder kontinuierlich verändern.

13. Filterelement (1) nach einem der vorhergehenden Ansprüche,
**dadurch gekennzeichnet,**
- **dass** das Filterelement (1) als Ringfilterelement (40) ausgestaltet ist, bei dem der jeweilige Strukturkörper (6, 7) und der Stützkörper (5) einen ringförmigen Ringfilterkörper (41) oder zumindest einen ringförmigen Teil davon bilden,
- **dass** das Filterelement (1) außerdem zwei Endscheiben (42, 43) aufweist, die jeweils an einem axialen Ende des Ringfilterkörpers (41) angeordnet sind.

14. Ringfilterelement (40) für eine Filtereinheit (30) zum Filtern eines Fluids,
- mit einem ringförmigen Ringfilterkörper (41), der ein Filterelement (1) nach einem der vorhergehenden Ansprüche aufweist oder dadurch gebildet ist,
- mit zwei Endscheiben (42, 43), die jeweils an einem axialen Ende des Ringfilterkörpers (41) angeordnet sind.

15. Filtereinheit (30) mit einem Gehäuse (31) und mit einem in das Gehäuse (31) eingesetztem Filterelement (1) nach einem oder mehreren der vorangehenden Ansprüche.

## Claims

1. Filter element (1) for a filter unit (30) for filtering a fluid,
- wherein the filter element (1) has a filter element body (3), through which fluid can flow, having at least one structural body (6, 7) and one support body (5),
- wherein the respective structural body (6, 7) has a filter structure permeable to the fluid with a plurality of apertures/pores (17),
- wherein the filter structure is configured as a spatially cross-linked lattice structure (15) and the spatially cross-linked lattice structure (15) has a repeating regularity,
- wherein the apertures/pores (17) are formed as free spaces by lattice rods (16) connected securely to one another,
- wherein the support body (5) has a support structure permeable to the fluid,
- wherein the respective structural body (6, 7) and the support body (5) are produced respectively by means of a 3D-printing method,
**characterised in that**
the respective structural body (6, 7) and the support body (5) are 3D-printed from different materials and/or material compositions.

2. Filter element (1) according to claim 1,
**characterised in that**
the respective structural body (6, 7) and the support body (5) are 3D-printed respectively from plastic and/or plastic material.

3. Filter element (1) according to any one of the preceding claims,
**characterised in that**
- the structure of the support body (5) has a cell structure (10) which has passages (12) formed by cells, wherein the apertures/pores (17) of the respective structural body (6, 7) are smaller than the cells or the passages (12) of the support body (5) and/or
- the structure of the support body (5) has a cell structure (10) which has passages (12) formed by cells, wherein lattice rods (16) of the lattice structure (15) of the respective structural body (6, 7) have a smaller cross-section than cell rods of the cell structure of the support body (5).

4. Filter element (1) according to claim 3,
**characterised in that**
- the cells or the passages (12) of the support body (5) are at least twice or five times or ten times larger than the apertures/pores (17) of the respective structural body (6, 7), and/or
- the cross-section of the cell rods of the cell structure of the support body (5) are at least twice or five times or ten times larger than the cross-section of the lattice rods (16) of the lattice structure (15) of the respective structural body (6, 7).

5. Filter element (1) according to any one of the preceding claims,
**characterised in that**
- the structure of the support body (5) has a cell structure (10) which has passages (12) formed by cells,
- a portion of the lattice rods (16) of the lattice structure (15) penetrate into or pass through the passages (12) of the cell structure (10).

6. Filter element (1) according to claim 5,
**characterised in that**
a portion of the lattice rods (16) of the lattice structure (15) penetrate into or pass through the passages (12) of the cell structure (10) in such a way that the lattice structure (15) is fixed to the cell structure (10) in a form-fitting manner.

7. Filter element according to any one of claims 3 to 6,
**characterised in that**
- only one structural body (6, 7) is provided, wherein the cell structure of the support body (5) is arranged inside the lattice structure (15) of this structural body (6, 7), wherein some of the lattice rods (16) penetrate through the cells, or
- two structural bodies (6, 7) arranged coaxially inside one another are provided and the support body (5) is arranged between the two structural bodies (6, 7), wherein some of the lattice rods (16) penetrate the cells of the cell structure (10) of the support body (5) and connect the two structural bodies (6, 7) to one another.

8. Filter element (1) according to any one of the preceding claims,
**characterised in that**
- the respective structural body (6, 7) and the support body (5) are configured to be in the form of hollow cylinders and are arranged coaxially inside one another, preferably concentrically to one another, wherein the respective structural body (6, 7) and the support body (5) are arranged at least approximately parallel to one another, and/or
- the respective structural body (6, 7) is securely connected to the support body (5), wherein the secure connection between the respective structural bodies (6, 7) and the support body (5) is formed by a material connection.

9. Filter element (1) according to any one of the preceding claims,
**characterised in that**
- further structural bodies (6, 7) are provided on two structural bodies (6, 7) arranged coaxially inside one another,
- a further structural body (6), with its inner region (19), is in direct contact with the outer region (18) of the structural body (7) and is securely connected thereto,
- a further structural body (7), with its outer region (18), is in direct contact with the inner region (19) of the structural body (7) and is securely connected thereto,
- it can be provided in particular that the structural bodies (6, 7) penetrate one another via their outer regions (18) and inner regions (19) in an overlapping manner at least in some areas.

10. Filter element (1) according to any one of the preceding claims
**characterised in that**
- materials/substances which are reactive or have a catalytic effect on the fluid are embedded in the apertures/pores (17) formed by the cross-linked and securely connected lattice rods (16), wherein the fluid to be filtered has a coalescing effect for forming particles which can be separated, and/or
- the apertures/pores (17) of the support body (5) for filtering liquid fluids, formed by the connected lattice rods (16), each have edge lengths of 0.05 mm to 15 mm, preferably 0.1 mm to 10 mm, or for filtering gaseous fluids each have edge lengths of 0.1 mm to 40 mm, preferably 4 mm to 20 mm.

11. Filter element (1) according to any one of the preceding claims,
**characterised in that**
- a plurality of adjacent structural bodies (6, 7) have mutually different cross-linked lattice structures (15),
- a plurality of adjacent structural bodies (6, 7) have material properties of the cross-linked lattice structures (15) which differ from one another,
- the mutually different cross-linked lattice structures (15) and the mutually different material properties of the cross-linked lattice structures (15) change abruptly or continuously,
- in particular it can be provided that the respective structural body (6, 7) and the support body (5) can be made in one piece.

12. Filter element (1) according to any one of the preceding claims,
**characterised in that**
- flow guide elements/guide bodies (28) are formed on and/or inside the structural bodies (6, 7) and the support body (5).
- the flow guide elements/guide bodies (28) are configured to overlap on further structural bodies (6, 7) and or the support body (5),
- the flow guide elements/guide bodies (28) have a flat and/or curved and/or sinuous shape,
- the flow guide elements/guide bodies (28) change their shape abruptly or continuously.

13. Filter element (1) according to any one of the preceding claims,
**characterised in that**
- the filter element (1) is configured as a ring filter element (40), in which the respective structural body (6, 7) and the support body (5) form an annular ring filter body (41) or at least an annular part thereof,
- the filter element (1) also has two end discs (42, 43), which are arranged respectively at an axial end of the ring filter body (41).

14. Ring filter element (40) for a filter unit (30) for filtering a fluid,
- with an annular ring filter body (41), which has a filter element (1) according to any one of the preceding claims or is formed thereby,
- with two end discs (42, 43), each of which is arranged at one axial end of the ring filter body (41).

15. Filter unit (30) with a housing (31) and with a filter element (1) inserted into the housing (31) according to one or more of the preceding claims.

## Revendications

1. Élément filtrant (1) pour une unité de filtre (30) pour la filtration d'un fluide,
- dans lequel l'élément filtrant (1) présente un corps d'élément filtrant (3) traversable par le fluide avec au moins un corps structurel (6, 7) et un corps d'appui (5),
- dans lequel le corps structurel (6, 7) respectif présente une structure de filtre perméable au fluide avec une pluralité de mailles/pores (17),
- dans lequel la structure de filtre est réalisée comme structure treillissée (15) réticulée dans l'espace et la structure treillissée (15) réticulée dans l'espace présente une régularité se répétant,
- dans lequel les mailles/pores (17) sont formés comme espaces libres par des barres de treillis (16) reliées fixement entre elles,
- dans lequel le corps d'appui (5) présente une structure d'appui perméable au fluide,
- dans lequel le corps structurel (6, 7) respectif et le corps d'appui (5) sont fabriqués respectivement au moyen d'un procédé d'impression 3D,
**caractérisé en ce que**
le corps structurel (6, 7) respectif et le corps d'appui (5) sont imprimés en 3D en différents matériaux et/ou compositions de matériau.

2. Élément filtrant (1) selon la revendication 1,
**caractérisé en ce que**
le corps structurel (6, 7) respectif et le corps d'appui (5) sont imprimés en 3D respectivement en matière plastique et/ou matériau plastique.

3. Élément filtrant (1) selon l'une quelconque des revendications précédentes,
**caractérisé en ce que**
- la structure du corps d'appui (5) présente une structure de cellule (10) qui présente des passages (12) formés par des cellules, dans lequel les mailles/pores (17) du corps structurel (6, 7) respectif sont inférieures aux cellules ou aux passages (12) du corps structurel (5), et/ou
- la structure du corps d'appui (5) présente une structure de cellule (10) qui présente des passages (12) formés par des cellules, dans lequel des barres de treillis (16) de la structure treillissée (15) du corps structurel (6, 7) respectif présentent une section transversale inférieure à celle des barres de cellule de la structure de cellule du corps d'appui (5).

4. Élément filtrant (1) selon la revendication 3,
**caractérisé en ce que**
- les cellules ou les passages (12) du corps d'appui (5) sont au moins deux fois ou cinq fois ou dix fois plus grands que les mailles/pores (17) du corps structurel (6, 7) respectif, et/ou
- la section transversale des barres de cellule de la structure de cellule du corps d'appui (5) sont au moins deux fois ou cinq fois ou dix fois plus grande que la section transversale des barres de treillis (16) de la structure treillissée (15) du corps structurel (6, 7) respectif.

5. Élément filtrant (1) selon l'une quelconque des revendications précédentes,
**caractérisé en ce que**
- la structure du corps d'appui (5) présente une structure de cellule (10) qui présente des passages (12) formés par des cellules,
- une partie des barres de treillis (16) de la structure treillissée (15) pénètre dans les passages (12) de la structure de cellule (10) ou les traversent.

6. Élément filtrant (1) selon la revendication 5,
**caractérisé en ce que**
une partie des barres de treillis (16) de la structure treillissée (15) pénètre dans les passages (12) de la structure de cellule (10) ou les traverse de sorte que la structure treillissée (15) soit fixée par complémentarité de formes à la structure de cellule (10).

7. Élément filtrant selon l'une quelconque des revendications 3 à 6,
**caractérisé en ce que**
- seul un unique corps structurel (6, 7) est prévu, dans lequel la structure de cellule du corps d'appui (5) est agencée à l'intérieur de la structure treillissée (15) de ce corps structurel (6, 7), dans lequel certaines des barres de treillis (16) traversent les cellules, ou
- deux corps structurels (6, 7) agencés coaxialement l'un dans l'autre sont prévus et le corps d'appui (5) est agencé entre les deux corps structurels (6, 7), dans lequel certaines des barres de treillis (16) traversent les cellules de la structure de cellule (10) du corps d'appui (5) et relient les deux corps structurels (6, 7) entre eux.

8. Élément filtrant (1) selon l'une quelconque des revendications précédentes,
**caractérisé en ce que**
- le corps structurel (6, 7) respectif et le corps d'appui (5) sont configurés en forme de cylindre creux et sont agencés coaxialement l'un dans l'autre, de préférence concentriquement l'un à l'autre, dans lequel le corps structurel (6, 7) respectif et le corps d'appui (5) sont agencés au moins approximativement parallèlement l'un à l'autre, et/ou
- le corps d'appui (6, 7) respectif est relié fixement au corps d'appui (5), dans lequel la liaison fixe entre les corps structurels (6, 7) respectifs et le corps d'appui (5) est formée par une liaison de matière.

9. Élément filtrant (1) selon l'une quelconque des revendications précédentes,
**caractérisé en ce que**
- d'autres corps structurels (6, 7) sont prévus au niveau de deux corps structurels (6, 7) agencés coaxialement l'un dans l'autre,
- un autre corps structurel (6) est avec sa zone intérieure (19) en contact direct avec la zone extérieure (18) du corps structurel (7) et est relié fixement à celui-ci,
- un autre corps structurel (7) est avec sa zone extérieure (18) en contact direct avec la zone intérieure (19) du corps structurel (7) et est relié fixement à celui-ci,
- en particulier il peut être prévu que les corps structurels (6, 7) se traversent en chevauchant au moins par endroits entre eux sur leurs zones (18) extérieures et zones (19) intérieures.

10. Élément filtrant (1) selon l'une quelconque des revendications précédentes,
**caractérisé en ce que**
- dans les mailles/pores (17) formés par les barres de treillis (16) reliées fixement et réticulées, des matériaux/substances réactifs ou agissant sur le fluide de manière catalytique sont intégrés, dans lequel le fluide à filtrer présente une action coalescente pour la formation de particules séparables, et/ou
- les mailles/pores (17) formés par les barres de treillis (16) reliées du corps d'appui (5) présentent pour la filtration de fluides liquides respectivement des longueurs d'arête de 0,05 mm à 15 mm, de préférence de 0,1 mm à 10 mm, ou pour la filtration de fluides gazeux respectivement des longueurs d'arête de 0,1 mm à 40 mm, de préférence de 4 mm à 20 mm.

11. Élément filtrant (1) selon l'une quelconque des revendications précédentes,
**caractérisé en ce que**
- plusieurs corps structurels (6, 7) contigus présentent des structures de treillis (15) réticulées différentes les unes des autres,
- plusieurs corps structurels (6, 7) contigus présentent des propriétés de matériau différentes les unes des autres des structures treillissées (15) réticulées,
- les structures treillissées (15) différentes les unes des autres réticulées et les propriétés de matériau différentes les unes des autres des structures treillissées (15) réticulées se modifient brusquement ou en continu,
- en particulier il peut être prévu que le corps structurel (6, 7) respectif et le corps d'appui (5) soient fabriqués respectivement en une pièce.

12. Élément filtrant (1) selon l'une quelconque des revendications précédentes,
**caractérisé en ce que**
- des éléments de guidage d'écoulement/corps de conduite (28) sont réalisés au niveau et/ou dans le corps structurel (6, 7) et le corps d'appui (5),
- les éléments de guidage d'écoulement/corps de conduite (28) sont réalisés chevauchant d'autres corps structurels (6, 7) et/ou le corps d'appui (5),
- les éléments de guidage d'écoulement/corps de conduite (28) présentent une forme plane et/ou courbée et/ou enroulée,
- les éléments de guidage d'écoulement/corps de conduite (28) se modifient dans leur forme brusquement ou en continu.

13. Élément filtrant (1) selon l'une quelconque des revendications précédentes,
**caractérisé en ce que**
- l'élément filtrant (1) est configuré comme élément filtrant annulaire (40), pour lequel le corps structurel (6, 7) respectif et le corps d'appui (5) forment un corps de filtre annulaire (41) annulaire ou au moins une partie annulaire de celui-ci,
- l'élément filtrant (1) présente en outre deux disques d'extrémité (42, 43) qui sont agencés respectivement à une extrémité axiale du corps de filtre annulaire (41).

14. Élément filtrant annulaire (40) pour une unité de filtre (30) pour la filtration d'un fluide,
- avec un corps de filtre annulaire (41) annulaire qui présente un élément filtrant (1) selon l'une quelconque des revendications précédentes ou est formé par celui-ci,
- avec deux disques d'extrémité (42, 43) qui sont agencés respectivement à une extrémité axiale du corps de filtre annulaire (41).

15. Unité de filtre (30) avec un boîtier (31) et avec un élément filtrant (1) inséré dans le boîtier (31) selon l'une ou plusieurs quelconques des revendications précédentes.
